# EUROPEAN PATENT APPLICATION

(11) **EP 3 537 298 A1**
(43) Date of publication of application: **11.09.2019**
(21) Application number: 18161061.9
(22) Date of filing: 09.03.2018
(51) Int. Cl.: G06F 9/50, G06Q 30/04, G06F 11/34

(54) **AN APPARATUS AND METHOD FOR EVALUATING AN INTENSITY OF A SOFTWARE USAGE**

(71) Applicant: Deutsche Telekom AG, 53113 Bonn (DE)
(72) Inventor: REITH, Lothar, 60596 Frankfurt am Main (DE)
(74) Representative: Vossius & Partner Patentanwälte Rechtsanwälte mbB

(57) **Abstract**

The disclosure relates to an apparatus (100) for evaluating an intensity of software usage on a sample hardware (131) such as a processor with reference to a reference hardware (151), wherein the apparatus (100) comprises: a memory (101) configured to store a plurality of reference software instructions; a communication interface (103) configured to transmit the plurality of reference software instructions to the sample hardware (131) and to the reference hardware (151), and to receive a first performance result from the reference hardware (151) and a second performance result from the sample hardware (131), wherein the first performance result indicates an amount of time and/or resource consumed by the reference hardware (151) for executing the plurality of reference software instructions, and wherein the second performance result indicates a further amount of time and/or resource consumed by the sample hardware (131) for executing the plurality of reference software instructions; and a processing unit (105) configured to determine a software-usage unit on the basis of the first performance result received from the reference hardware (151) and to calculate the number of software-usage units that are used by the sample hardware (131) on the basis of the second performance result received from the sample hardware, wherein the software-usage units indicate the intensity of software usage (151).

## Description

### TECHNICAL FIELD

In general, the present invention relates to the field of computer hardware. More specifically, the present invention relates to an apparatus and a corresponding method for evaluating an intensity of software usage on a hardware, in particular a processor.

### BACKGROUND

Monetization of software such as virtual network functions (VNFs) can be facilitated by running software on a virtualization infrastructure such as a network functions virtualization infrastructure (NFVI) as defined by European Telecommunications Standards Institute (ETSI). Thereby, a service provider does not need to maintain a complex computing system including multiple servers and custom hardware appliances for each network function.

However, the state of the art does not allow flexible software monetization which can depend upon the intensity of the software use, e.g. the number of instructions or commands of the software being executed. Instead, the current software monetization depends upon the hardware on which the software is executed at runtime.

In light of the above, there is a need for an improved apparatus and method, allowing evaluating an intensity of software usage on a hardware, in particular a processor.

### SUMMARY OF THE INVENTION

It is an object of the disclosure to provide an improved apparatus and method for evaluating an intensity of software usage on a hardware, in particular a processor.

The foregoing and other objects are achieved by the subject matter of the independent claims. Further implementation forms are apparent from the dependent claims, the description and the figures.

Generally, the disclosure relates to an apparatus and a corresponding method for evaluating an intensity of software usage on a hardware, in particular a processor. More specifically, embodiments of the present disclosure can compare the performance of a hardware of interest (e.g. a modern cutting-edge processor) with the performance of a reference hardware (such as an i386 processor), and then use the comparison result to determine a software usage fee for software executed on the hardware of interest. Thereby, software monetization can be made independent of the hardware on which the software is executed and can be dependent on the intensity of the software usage.

Thus, according to a first aspect the disclosure relates to an apparatus for evaluating an intensity of software usage on a sample hardware with reference to a reference hardware, wherein the apparatus comprises: a memory configured to store a plurality of reference software instructions; a communication interface configured to transmit the plurality of reference software instructions to the sample hardware as well as to the reference hardware and to receive a first performance result from the reference hardware and a second performance result from the sample hardware, wherein the first performance result indicates an amount of time and/or resource consumed by the reference hardware for executing the plurality of reference software instructions, and wherein the second performance result indicates a further amount of time and/or resource consumed by the sample hardware for executing the plurality of reference software instructions.

The apparatus also comprises a processing unit configured to determine a software-usage unit on the basis of the first performance result received from the reference hardware, and to calculate the number of software-usage units that are used by the sample hardware on the basis of the second performance result received from the sample hardware, wherein the software-usage units indicate the intensity of software usage.

An improved apparatus is hence provided, allowing evaluating an intensity of software usage on a hardware, in particular a processor.

In a further possible implementation form of the first aspect, the processing unit is configured to determine the software-usage unit by calculating the number of the plurality of reference software instructions that are executed by the reference hardware in a predetermined time period.

In a further possible implementation form of the first aspect, the processing unit is configured to evaluate the performance of the sample hardware by calculating the number of software-usage units that are used by the sample hardware when the sample hardware executes the plurality of reference software instructions in the predetermined time period.

In a further possible implementation form of the first aspect, the processing unit is further configured to determine the software-usage unit by calculating an amount of energy that is consumed by the reference hardware when the reference hardware executes one of the plurality of reference software instructions or when the reference hardware executes the plurality of reference software instructions in a predetermined time period.

In a further possible implementation form of the first aspect, the processing unit is configured to evaluate the performance of the sample hardware by calculating the number of software-usage units that are used by the sample hardware when the sample hardware executes one of the plurality of reference software instructions or when the sample hardware executes the plurality of reference software instructions in the predetermined time period.

In a further possible implementation form of the first aspect, the processing unit is configured to determine the software-usage unit by calculating the number of clock cycles that is consumed by the reference hardware when the reference hardware executes one of the plurality of reference software instructions or when the reference hardware executes the plurality of reference software instructions in a predetermined time period.

In a further possible implementation form of the first aspect, the processing unit is configured to evaluate the performance of the sample hardware by calculating the number of software-usage units that are used by the sample hardware when the sample hardware executes one of the plurality of reference software instructions or when the sample hardware executes the plurality of reference software instructions in the predetermined time period.

In a further possible implementation form of the first aspect, the sample hardware comprises a hardware for network virtualization and/or a remote hardware, and wherein the communication interface of the apparatus (100) is configured to communicate with the sample hardware via a network protocol, for instance, HTTP, HTTPS, TCP/IP, LTE/5G, Bluetooth, Wifi, SSH, etc.

In a further possible implementation form of the first aspect, the reference hardware comprises a commercially available processor, for example, a 80386 processor.

In a further possible implementation form of the first aspect, the plurality of reference software instructions comprises an X86-instruction.

According to a second aspect, the disclosure relates to an apparatus for evaluating an intensity of software usage. The apparatus comprises a processing unit configured to execute at least one software instruction and to measure a performance parameter associated with the execution of the at least one software instruction. The processing unit is further configured to set the measured performance parameter in relation to a reference performance parameter in order to obtain a software-usage unit, wherein the reference performance parameter refers to executing the software instruction on a reference hardware, and wherein the software-usage unit indicates the intensity of software usage.

Thus, an improved apparatus is provided, allowing evaluating an intensity of software usage on a sample hardware, in particular a processor.

In a further possible implementation form of the second aspect, the measured performance parameter is execution time of executing the software instruction on the sample hardware, and the reference performance parameter indicates execution time of executing the software instruction on the reference hardware.

In a further possible implementation form of the second aspect, the processing unit is configured to weight the software-usage unit by a hardware performance factor, wherein the hardware performance factor indicates a number of instructions that the sample hardware is capable of executing per time interval.

In a further possible implementation form of the second aspect, the processing unit is configured to generate a table comprising at least one numerical software usage value, in particular an integer value, and the processing unit is configured to determine the at least one numerical software usage value by executing a plurality of software instructions on the reference hardware, wherein the at least one numerical software usage value indicates cost of the software usage unit or a software usage fee, in particular a license fee, for executing the plurality of software instructions in dependency on the software-usage unit or an internal cost for network optimization or a weight for optimization or statistics in network management.

In a further possible implementation form of the second aspect, the processing unit is configured to generate a further table comprising the software-usage unit and to determine the software-usage unit by comparing the measured performance parameter to the reference performance parameter, wherein the software-usage unit indicates efficiency of the sample hardware for executing the at least one software instruction in comparison with the reference hardware.

In a further possible implementation form of the second aspect, the processing unit is configured to measure a length of a time period for a workload in which the sample hardware executes exclusively the plurality of software instructions and to measure a hardware-dependent software usage value by executing the plurality of software instructions on the sample hardware within the length of the time period. Moreover, the processing unit is configured to convert the hardware-dependent software usage value by multiplying the hardware-dependent software usage value with the software-usage unit as well as the at least one numerical software usage value into a hardware-independent software usage value.

In a further possible implementation form of the second aspect, the apparatus further comprises a memory, and the processing unit of the apparatus is configured to sum up a plurality of hardware-dependent software usage values that are generated in a predetermined period of time on the sample hardware and to convert the plurality of hardware-dependent software usage values into a plurality of hardware-independent software usage values by multiplying the hardware-dependent software usage value with the software-usage unit as well as the at least one numerical software usage value, wherein the processing unit is further configured to store the plurality of hardware-independent software usage values in the memory.

In a further possible implementation form of the second aspect, the apparatus comprises an application programming interface that is configured to output or automatically charge the software usage fee according to the plurality of hardware-independent software usage values.

The software usage fee can be a software license fee.

The charging of a software usage charge can be an integral part of the API (Application Programming Interface) with which the software is offered in a service based architecture as defined for the 5G Core Network.

According to a third aspect, the disclosure relates to a method for evaluating an intensity of software usage on a sample hardware with reference to a reference hardware, wherein the method comprises the following steps: storing a plurality of reference software instructions; transmitting the plurality of reference software instructions to the sample hardware and to the reference hardware; receiving a first performance result from the reference hardware and a second performance result from the sample hardware, wherein the first performance result indicates an amount of time and/or resource consumed by the reference hardware for executing the plurality of reference software instructions, and wherein the second performance result indicates a further amount of time and/or resource consumed by the sample hardware for executing the plurality of reference software instructions; determining a software-usage unit on the basis of the first performance result received from the reference hardware; and calculating the number of software-usage units that are used by the sample hardware on the basis of the second performance result received from the sample hardware, wherein the software-usage units indicate the intensity of software usage.

The method can be implemented using the apparatus according to the first aspect.

Thus, an improved method is provided, allowing evaluating an intensity of software usage on a sample hardware, in particular a processor.

According to a fourth aspect, the disclosure relates to a computer program comprising a computer readable program code which performs the method according to the second aspect.

### BRIEF DESCRIPTION OF THE DRAWINGS

Further embodiments of the invention will be described with respect to the following figures, wherein:
Figure 1 shows a schematic diagram of an apparatus according to an embodiment for evaluating performance of a hardware, in particular a processor; and
Figure 2 shows a diagram of a method for evaluating performance of a hardware according to an embodiment.

In the various figures, identical reference signs will be used for identical or at least functionally equivalent features.

### DETAILED DESCRIPTION OF EMBODIMENTS

In the following description, reference is made to the accompanying drawings, which form part of the disclosure, and in which are shown, by way of illustration, specific aspects in which the present invention may be placed. It will be appreciated that other aspects may be utilized and structural or logical changes may be made without departing from the scope of the present invention. The following detailed description, therefore, is not to be taken in a limiting sense, as the scope of the present invention is defined by the appended claims.

For instance, it will be appreciated that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures.

Moreover, in the following detailed description as well as in the claims, embodiments with different functional blocks or processing units are described, which are connected with each other or exchange signals. It will be appreciated that the present invention covers embodiments as well, which include additional functional blocks or processing units that are arranged between the functional blocks or processing units of the embodiments described below.

Finally, it is understood that the features of the various exemplary aspects described herein may be combined with each other, unless specifically noted otherwise.

The present disclosure relates to a concept of "instantiatedSoftwareMinute" which is disclosed on October 12 in Den Haag at the SDN-NFV World Conference. However, this disclosure does not provide a hardware-independent measure for intensity of software usage.

To measure the number of times of software usage, a unit "instantiated Software Minute" can be turned into an "instantiated Software Minute Equivalent" or more precisely an "instantiated Software Minute Equivalent to a minute-exclusive-usage-by-the-software-of-a 80386 processor", which will be referred to as a software usage unit and discussed in more details in the following embodiments.

According to embodiments of the present disclosure, a key aspect is the introduction of a chosen reference hardware, preferably a historic processor such as an 80386 processor. Thereby, embodiments of the present disclosure can compare the performance of a modern processor of interest with the performance of the historic i386 processor.

According to an embodiment, the i386 processor can be used as a "reference normal" for executing an amount of instructions from a predefined benchmark program in a predetermined period of time. For example, the Inter386 can execute a mixture of short, medium long, and long instructions, wherein this mixture of instructions, as typical for a network function, can be decided by an industry body such as European Telecommunications Standards Institute (ETSI).

After the reference normal is set up, a modern processor can be evaluated in a same way as the i386 processor, by executing the same mixture of short, medium long and long instructions on this modern processor in the same predetermined period of time. If the modern processor is classified as being able to execute, for instance, 1000 times more the length instructions compared to the i386hardware, the charge for this modern processor can be 1000 times higher and thus be "hardware-independent" to a certain degree, wherein "certain degree" is sufficient in such case since it is not necessary to be 100% accurate.

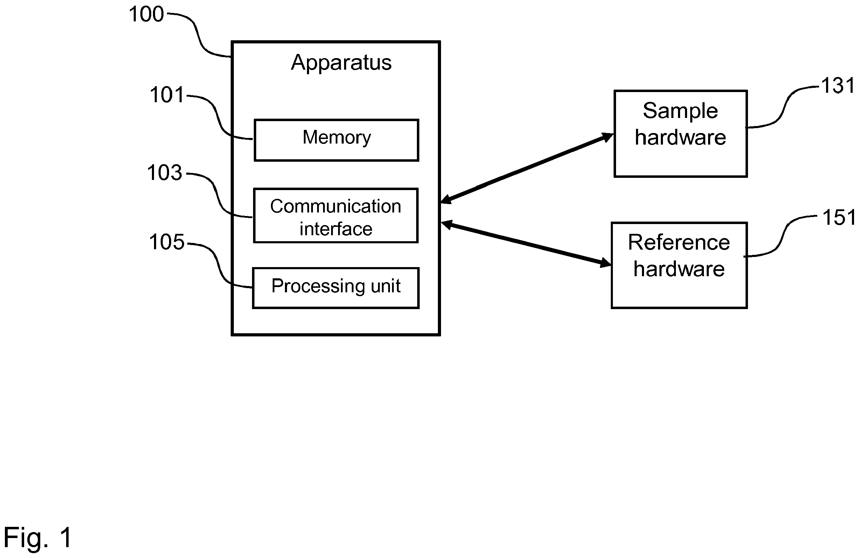

More details for evaluating a modern processor on the basis of the i386 processor will be further explained under reference to figure 1 in the following embodiments.

Figure 1 shows a schematic diagram of an apparatus 100 for evaluating an intensity of software usage on a sample hardware 131 such as a modern processor with reference to a reference hardware 151 such as an i386 processor according to an embodiment, wherein the apparatus 100 comprises a memory 101, a communication interface 103 and a processing unit 105.

The memory 101 of the apparatus 100 is configured to store a plurality of reference software instructions and the communication interface 103 of the apparatus 100 is configured to transmit the plurality of reference software instructions to the sample hardware 131 and to the reference hardware 151, wherein the plurality of reference software instructions comprises an X86-instruction.

In an embodiment, the communication interface 103 can communicate with the sample hardware 131 via a network protocol, for example, HTTP, HTTPS, TCP/IP, LTE/5G, Bluetooth, Wifi, SSH, etc, if the sample hardware 131 is a hardware for network virtualization or a remote hardware in a cloud storage.

The communication interface 103 of the apparatus 100 is further configured to receive a first performance result from the reference hardware 151 and a second performance result from the sample hardware 131, wherein the first performance result indicates an amount of time and/or resource consumed by the reference hardware 151 for executing the plurality of reference software instructions, and wherein the second performance result indicates a further amount of time and/or resource consumed by the sample hardware 131 for executing the plurality of reference software instructions.

The processing unit 105 of the apparatus 100 is configured to determine a software-usage unit on the basis of the first performance result received from the reference hardware 151 and to calculate the number of software-usage units that are used by the sample hardware 131 on the basis of the second performance result received from the sample hardware 131.

In an embodiment, the processing unit 105 can first determine the software-usage unit by calculating the number of reference software instructions that are executed by the reference hardware 151 (i.e. the i386 processor) in a predetermined time period, wherein the reference software instruction can be an X86-instruction, i.e. an X86-command.

Next, the processing unit 105 can calculate the number of software-usage units that are used by the sample hardware 131 when the sample hardware 131 executes the reference software instructions such as the X86-commands in the predetermined time period. Thereby, the performance of the sample hardware 131 can be evaluated.

In another embodiment, the processing unit 105 can calculate the software-usage unit by calculating an amount of "energy" that is consumed by the i386 processor when the i386 processor executes one of the plurality of reference software instructions, or when the i386 processor executes one or more of the plurality of reference software instructions in the predetermined time period.

Instead of calculating energy consumption, the processing unit 105 can alternatively evaluate the number of "clock cycles" used by the i386 processor. More specifically, the processing unit 105 is configured to calculate the software-usage unit by calculating the number of clock cycles that is consumed by the i386 processor when the i386 processor executes one reference software instruction or when the i386 processor executes one or more reference software instructions in the predetermined time period.

After the reference normal on the basis of the i386 processor is set up, the processing unit 105 can then evaluate the performance of the sample hardware 131, i.e. any modern processor of interest, by calculating the number of software-usage units that are used by the sample hardware 131 when the sample hardware 131 executes one reference software instruction or when the sample hardware executes one or more reference software instructions in the predetermined time period.

Furthermore, in an embodiment one normalization unit of X86-instruction execution can be defined in such a way that each instruction from the X86 instruction set, when executed on the reference hardware (such as the i386 chip), will consume an integer number of that X86-normalized processing timeslot normalization unit, wherein this integer number can be defined as an industry standard or defector industry standard, and wherein this integer number reflects the value of the related instructions, such as the number of clock cycles consumed for execution of the respective instruction on the reference hardware, or energy units consumed for the execution of the respective instruction on the reference hardware 151. The selection of the integer numbers shall minimize the resulting integer numbers for each instruction.

In another embodiment, the software usage unit can be defined in such a way that it results in a hardware-independent virtualized processing performance unit, wherein, independent of the hardware used, a workload will consume during the demand satisfaction being the execution of the workload roughly the same integer number referred to as X86-Norm-base.

Defining such an X86-Norm-base number for each hardware by measuring the processor performance in number of X86 instruction set commands executed per agreed time interval using an agreed mix of workload types as benchmark is an important basis for the differentiated charging of workload placements in edge computing in particular and in virtualized computing environments such as NFV (Network Function Virtualization) in general.

According to a further embodiment, the processing unit 105 is configured to execute at least one software instruction and to measure a performance parameter associated with the execution of the at least one software instruction. The processing unit 105 is further configured to set the measured performance parameter in relation to a reference performance parameter in order to obtain a software usage unit, wherein the reference performance parameter refers to executing the software instruction on a reference hardware 151, and wherein the software usage unit indicates the intensity of software usage.

In a further embodiment, the measured performance parameter can be execution time of executing the software instruction on the sample hardware 131, and the reference performance parameter can indicate execution time of executing the software instruction on the reference hardware 151.

In a further embodiment, the processing unit 105 can be configured to weight the software usage unit by a hardware performance factor, wherein the hardware performance factor indicates a number of instructions that the sample hardware 131 is capable of executing per time interval.

According to an embodiment, the processing unit 105 is configured to generate a table for the reference hardware 151 of the 64-bit architecture comprising at least one numerical software usage value, in particular an integer value, wherein the processing unit 105 is configured to determine the at least one numerical software usage value by executing a plurality of software instructions on the reference hardware 151, wherein the at least one numerical software usage value indicates cost of the software usage unit or a software usage fee, in particular a license fee, for executing the plurality of software instructions in dependency on the software-usage unit or an internal cost for network optimization or a weight for optimization or statistics in network management.

It is to be appreciated that the numerical software usage value is technically interpreted since this numerical software usage value can provide several technical effects and improvements according to an embodiment: this value can be the price of a software usage minute, or a value that reflects the internal costs and is used for network optimization purposes, or a value that reflects a specific cost factor, namely a software usage fee, or a weight that is used for other purposes, for example for statistical purposes or for optimization purposes in network management, network expansion planning or for quality assurance, or whether a network operator can save costs when using different software suppliers that have comparable functionality. This numeric value, preferably an integer value, can be used in many ways, in particular for a 64-bit software base value table.)

Similarly, a second table can also be generated for another reference hardware in another embodiment for the 32-Bit architecture, such as a 32-bit-Software-Base-Value-Table.

According to an embodiment, the processing unit 105 is configured to generate a further table comprising the software-usage unit and to determine the software-usage unit by comparing the measured performance parameter to the reference performance parameter, wherein the software-usage unit indicates efficiency of the sample hardware 131 for executing the at least one software instruction in comparison with the reference hardware 151.

It is to be appreciated that the software-usage unit, which is used as a conversion factor for converting a hardware-dependent software usage value into a hardware-independent software usage as will be shown below, can be determined by hands-free expert estimation or determined by a measurement method that uses a "benchmark workload" consisting of a defined set of x86-instructions with a defined set of input parameters (depending on input parameters, loops can be looped or paced differently, the measuring method can deliver very different values). The measurement method can have a supporting effect in order to support expert determination.

According to an embodiment, the processing unit 105 is configured to measure a length of a time period for a workload in which the sample hardware 131 executes exclusively the plurality of software instructions and to measure a hardware-dependent software usage value by executing the plurality of software instructions on the sample hardware 131 within the length of the time period, wherein the processing unit 105 is configured to convert the hardware-dependent software usage value by multiplying the hardware-dependent software usage value with the software-usage unit as well as the at least one numerical software usage value into a hardware-independent software usage value.

According to an embodiment, the apparatus 100 further comprises a memory 101, and the processing unit 105 is configured to sum up a plurality of hardware-dependent software usage values that are generated in a predetermined period of time on the sample hardware 131 and to convert the plurality of hardware-dependent software usage values into a plurality of hardware-independent software usage values by multiplying the hardware-dependent software usage value with the software-usage unit as well as the at least one numerical software usage value, wherein the processing unit 105 is further configured to store the plurality of hardware-independent software usage values in the memory 101.

This embodiment provides an advantage of conversion of a hardware-dependent, but exactly measured software usage value in a sufficiently accurately estimated software usage value, which has in particular an advantage that it is hardware-independent, and - in many cases - for the respective purposes (e.g., about network optimization) is sufficiently accurate, where one can neglect the influence of the different input data or deliberately neglected.

In a further embodiment, these software usage values can be summed up, e.g., in a software usage accounting record by the operating system and by the hypervisor for each software. These accounting records are not exported in a 3GPP-defined way as offline-charging, or not billed online in real-time, but can be used for online charging by, for instance, prepaid cloud services.

In another embodiment, for offline charging procedures, the conversion can take place with a time delay, e.g. once a month, wherein each hardware-specific measured-software usage-value accurately measured can be first converted to a hardware-specific-normalized-software-usage-value that is still hardware-specific, and then, in a second aggregation step, all hardware-specific-normalized software - usage-values can be "aggregated" into a hardware-independent normalized-software-usage-value, in the aggregation period, e.g. one month.

Thus, the normalized software usage value is a measure of software usage and represents a value related to how much the sum of the numerical values of the software usage would have been on the different hardware when the software was used. Inaccuracy comes into play during the conversion, since a conversion factor is used here which has been estimated by a committee of experts or has been measured using a specific benchmark software and specific input data. One can reduce inaccuracy by using multiple conversion tables based on different benchmark data, such as separately for an I/O intensive usage scenario or for a CPU-intensive usage scenario.

According to an embodiment, a "normalized software usage value" can thus be determined, which is aggregated over a defined software usage period. This is a numeric value related to aggregated software usage - aggregated across multiple hardware types and aggregated over a period of use (e.g., one month).

Thus, this brings the advantage that the network operator can perform a simplified network optimization. It also allows a simplified determination of software license costs, whereby the network operator no longer distinguish (and possibly disclose to business partners such as software suppliers), which hardware is used. It is also much easier to introduce new hardware without, e.g. to change their network optimization method and licensing cost method.

Moreover, in an embodiment the apparatus 100 can also comprise an application programming interface (API) that is configured to output or automatically charge a software usage fee according to the plurality of hardware-independent software usage values. The software usage fee can be a software license fee and the charging of a software usage charge can be an integral part of the application programming interface (API) with which the software is offered in a service based architecture as defined for the 5G Core Network.

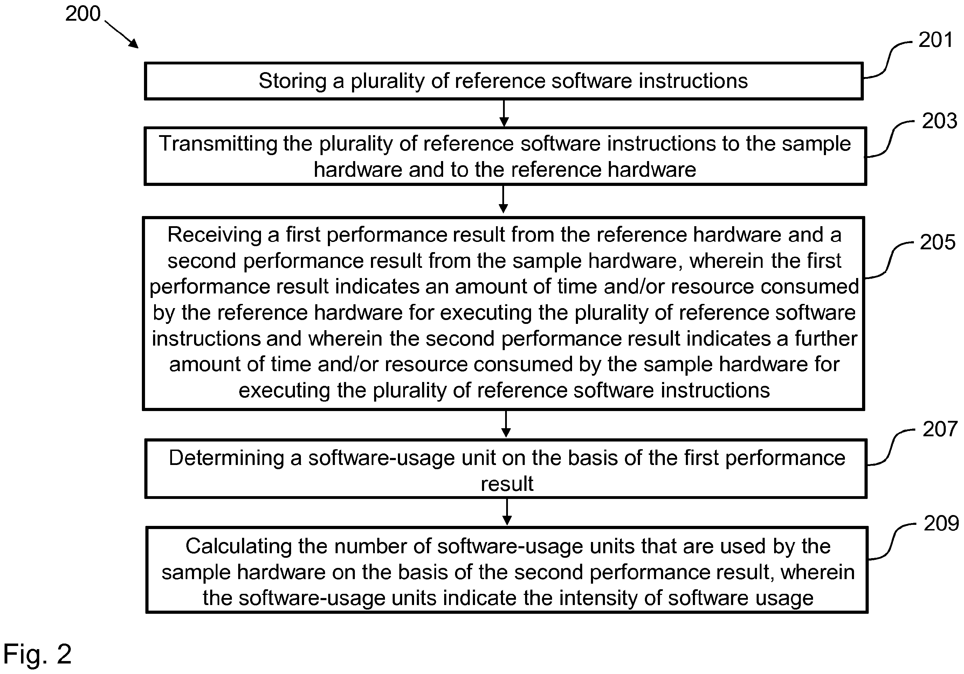

Figure 2 shows a diagram illustrating a corresponding method 200 for evaluating an intensity of software usage on a sample hardware 131 such as a modern processor with reference to a reference hardware 151, in particular an i386 processor.

The method 200 comprises the following steps: a first step 201 of storing a plurality of reference software instructions; and a second step 203 of transmitting the plurality of reference software instructions to the sample hardware 131 and to the reference hardware 151.

The method 200 can comprise a further step 205 of receiving a first performance result from the reference hardware 151 and a second performance result from the sample hardware 131, wherein the first performance result indicates an amount of time and/or resource consumed by the reference hardware 151 for executing the plurality of reference software instructions, and wherein the second performance result indicates a further amount of time and/or resource consumed by the sample hardware 131 for executing the plurality of reference software instructions.

The method 200 can comprise a further step 207 of determining a software-usage unit on the basis of the first performance result received from the reference hardware 151; and a final step 209 of calculating the number of software-usage units that are used by the sample hardware 131 on the basis of the second performance result received from the sample hardware 131.

Thereby, the embodiments of the present disclosure can allow flexible monetization of software, by which a pricing policy on software can depend upon the intensity of the software use.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless of whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. An apparatus (100) for evaluating an intensity of software usage on a sample hardware (131) with reference to a reference hardware (151), the apparatus (100) comprising:
a memory (101) configured to store a plurality of reference software instructions;
a communication interface (103) configured to:
transmit the plurality of reference software instructions to the sample hardware (131) and to the reference hardware (151); and
receive a first performance result from the reference hardware (151) and a second performance result from the sample hardware (131), wherein the first performance result indicates an amount of time and/or resource consumed by the reference hardware (151) for executing the plurality of reference software instructions, and wherein the second performance result indicates a further amount of time and/or resource consumed by the sample hardware (131) for executing the plurality of reference software instructions; and
a processing unit (105) configured to:
determine a software-usage unit on the basis of the first performance result received from the reference hardware (151); and
calculate the number of software-usage units that are used by the sample hardware (131) on the basis of the second performance result received from the sample hardware (131), wherein the software-usage units indicate the intensity of software usage.

2. The apparatus (100) of claim 1, wherein the processing unit (105) is configured to determine the software-usage unit by calculating the number of the plurality of reference software instructions that are executed by the reference hardware (151) in a predetermined time period, and wherein the processing unit (105) is configured to evaluate the performance of the sample hardware (131) by calculating the number of software-usage units that are used by the sample hardware (131) when the sample hardware (131) executes the plurality of reference software instructions in the predetermined time period.

3. The apparatus (100) of any one of the preceding claims, wherein the processing unit (105) is further configured to determine the software-usage unit by calculating an amount of energy or clock cycles that is consumed by the reference hardware (151) when the reference hardware (151) executes one of the plurality of reference software instructions or when the reference hardware (151) executes the plurality of reference software instructions in a predetermined time period.

4. The apparatus (100) of any one of the preceding claims, wherein the reference hardware (151) comprises a commercially available processor, in particular, a 80386 processor, and wherein the plurality of reference software instructions comprises an X86-instruction.

5. The apparatus (100) of any one of the preceding claims, wherein the sample hardware (131) comprises a hardware for network virtualization and/or a remote hardware, and wherein the communication interface (103) of the apparatus (100) is configured to communicate with the sample hardware (131) via a network protocol, for instance, HTTP, HTTPS, TCP/IP, LTE/5G, Bluetooth, Wifi, SSH, etc.

6. An apparatus (100) for evaluating an intensity of software usage on a sample hardware (131) with reference to a reference hardware (151), the apparatus (100) comprising:
a processing unit (105) is configured to execute at least one software instruction and to measure a performance parameter associated with the execution of the at least one software instruction, the processing unit (105) being further configured to set the measured performance parameter in relation to a reference performance parameter in order to obtain the software-usage unit, the reference performance parameter referring to executing the at least one software instruction on a reference hardware (151), the software-usage unit indicating the intensity of software usage.

7. The apparatus (100) of claim 6, wherein the measured performance parameter is execution time of executing the at least one software instruction on the sample hardware (131), and wherein the reference performance parameter indicates execution time of executing the at least one software instruction on the reference hardware (151).

8. The apparatus (100) of claim 6 or 7, wherein the processing unit (105) is configured to weight the software-usage unit by a hardware performance factor, the hardware performance factor indicating a number of software instructions that the sample hardware (131) is capable of executing per time interval.

9. The apparatus (100) of any one of claims 6-8, wherein the processing unit (105) is configured to generate a table comprising at least one numerical software usage value, in particular an integer value, wherein the processing unit (105) is configured to determine the at least one numerical software usage value by executing a plurality of software instructions on the reference hardware (151), wherein the at least one numerical software usage value indicates cost of the software usage unit or a software usage fee, in particular a license fee, for executing the plurality of software instructions in dependency on the software-usage unit or an internal cost for network optimization or a weight for optimization or statistics in network management.

10. The apparatus (100) of any one of claims 6-9, wherein the processing unit (105) is configured to generate a further table comprising the software-usage unit and to determine the software-usage unit by comparing the measured performance parameter to the reference performance parameter, wherein the software-usage unit indicates efficiency of the sample hardware (131) for executing the at least one software instruction in comparison with the reference hardware (151).

11. The apparatus (100) of any one of claims 9-10, wherein the processing unit (105) is configured to measure a length of a time period for a workload in which the sample hardware (131) executes exclusively the plurality of software instructions and to measure a hardware-dependent software usage value by executing the plurality of software instructions on the sample hardware (131) within the length of the time period, wherein the processing unit (105) is configured to convert the hardware-dependent software usage value by multiplying the hardware-dependent software usage value with the software-usage unit as well as the at least one numerical software usage value into a hardware-independent software usage value.

12. The apparatus (100) of claim 11, wherein the apparatus (100) further comprises a memory (101), and wherein the processing unit (105) is configured to sum up a plurality of hardware-dependent software usage values that are generated in a predetermined period of time on the sample hardware (131) and to convert the plurality of hardware-dependent software usage values into a plurality of hardware-independent software usage values by multiplying the hardware-dependent software usage value with the software-usage unit as well as the at least one numerical software usage value, wherein the processing unit (105) is further configured to store the plurality of hardware-independent software usage values in the memory (101).

13. The apparatus (100) of claim 12, comprising an application programming interface being configured to output or automatically charge a software usage fee according to the plurality of hardware-independent software usage values.

14. A method (200) for evaluating an intensity of software usage on a sample hardware (131) with reference to a reference hardware (151), the method (200) comprising:
storing (201) a plurality of reference software instructions;
transmitting (203) the plurality of reference software instructions to the sample hardware (131) and to the reference hardware (151);
receiving (205) a first performance result from the reference hardware (151) and a second performance result from the sample hardware (131), wherein the first performance result indicates an amount of time and/or resource consumed by the reference hardware (151) for executing the plurality of reference software instructions, and wherein the second performance result indicates a further amount of time and/or resource consumed by the sample hardware (131) for executing the plurality of reference software instructions;
determining (207) a resource-usage unit on the basis of the first performance result received from the reference hardware (151); and
calculating (209) the number of resource-usage units that are used by the sample hardware (131) on the basis of the second performance result received from the sample hardware (131), wherein the resource-usage units indicate the intensity of software usage.

15. A computer program comprising program code for performing the method (200) according to claim 14, when executed on a computer or a processor.
